Europäisches Patentamt

European Patent Office

Office européen des brevets

(11) Publication number: **0 043 260**

**A1**

# EUROPEAN PATENT APPLICATION

(21) Application number: **81302910.5**

(22) Date of filing: **26.06.81**

(51) Int. Cl.³: **A 23 L 1/31**
**A 23 L 1/315**

(30) Priority: **26.06.80 GB 8020918**

(43) Date of publication of application:
**06.01.82 Bulletin 82/1**

(84) Designated Contracting States:
**DE FR GB IT NL**

(71) Applicant: **TWYDALE TURKEYS LIMITED**
**Wanford Road**
**Driffield Yorkshire(GB)**

(72) Inventor: **Clancy, John**
**The Hollies Main Street North Dalton**
**Nr. Driffield Northumberside(GB)**

(74) Representative: **Smith, Geoffrey Leonard et al,**
**STANLEY, POPPLEWELL, POOLE 54 New Cavendish**
**Street**
**London W1M 8HP(GB)**

(54) Process for producing a cookable meat product.

(57) A process for producing a cookable meat product, (1) which process includes the steps of forming a compact (2) of cookable meat and preserving the physical integrity of the compact (2) during subsequent processing steps, characterised in that it further includes coating at least part of the compact in a substantially oven-proof batter (4) and consolidating the coating; and a cookable meat product comprising a compact substantially or wholly of poultry meat (3), characterised in that the compact is partially coated with a substantially oven-proof batter. Preferably the compact is extruded, then frozen, coated with a coating of the batter and a layer of edible crumbs (5) applied to the batter coating.

FIG.4.

EP 0 043 260 A1

-1-

Title: PROCESS FOR PRODUCING A COOKABLE MEAT PRODUCT

DESCRIPTION

This invention relates to a process for the production of cookable meat products and to such cookable meat products.

In recent years products known as turkey rolls have become popular. These comprise a cylinder of compacted, extruded meat wrapped in a sheet of pork fat or coated with a co-extruded fat layer. The advantage to the consumer is that the product contains no bones and the advantage to the manufacturer is that substantially all of the meat upon the carcass can be utilized. The fat coating is believed to be desirable to maintain the integrity of the product during cooking and to prevent drying out and weight loss during cooking.

Major disadvantages of using the sheet of pork fat are that the entire product becomes permeated with a pork flavour, that the sheet must be manually wrapped about the cylinder and tied thereupon with string, and that the sheet remains visually unattractive after cooking.

A disadvantage of the known products is that many consumers do not like and will not eat fat so the fat layer, which constitutes a significant part of the weight of the product, may well be wasted.

According to a first aspect of the present invention there is provided a cookable meat product comprising a compact of poultry meat, such as turkey or chicken, which has a coating of substantially oven-proof batter thereupon. The compact may have a complete or partial coating, an advantage of the latter being that the meat may be inspected by the consumer prior to purchase. Preferably the meat product is in the form of a cylinder of dimensions suitable to form a family roast, or in slices to form a "burger". Very preferably the compact is formed by extrusion of the meat. It can be seen that various cross-sectional shapes may be obtained; a preferred form for packing and handling is a circular cross-section.

In a preferred product of the invention the batter has a coating of edible crumbs thereupon. Substantially oven-proof breadcrumbs can be used, to ensure an attractive cooked product.

According to a second aspect of the present invention there is provided a process for producing a cookable meat product, which process includes forming a compact of cookable meat, taking steps to preserve the physical integrity of the compact during subsequent processing steps, coating at least part of the compact in a substantially oven-proof batter, and consolidating the batter coating.

Preferably the compact is formed by extrusion of the cookable meat, however, other methods such as pressing the meat in a mould may be used. Preferably the physical integrity of the compact is preserved by freezing the compact, however other methods such as utilizing a gelatinous matrix are envisaged.

The batter coating may be consolidated by heating, and is an oven-proof batter.

Very preferably a raw meat such as beef, turkey or chicken flesh is employed in the process but other meat such as ham or bacon may be used. The term meat is employed broadly in the foregoing definition of the invention to embrace meat substitutes, e.g. soya protein, and fish. The meat is preferably tumbled with a brine solution to improve its texture and flavour and its subsequent agglutination, thus to improve its general quality. Take-up by the meat of the brine solution increases the weight of the meat and aids in the cooking of the meat by promoting what may be thought of as a self-basting process. After tumbling, the meat is generally allowed to rest for a period of time.

When extrusion of the tumbled meat is carried out, it is preferably performed using a vacuum filling machine into a cylindrical casing which may be of a fibrous material or of a plastics sheet material such as nylon. The casing may in certain circumstances be edible.

Very preferably the encased extruded compact is then frozen until a suitable temperature is achieved; blast freezing is preferred, other suitable techniques include immersion in chilled brine or propylene glycol. After the compact has been frozen or otherwise treated to retain its physical integrity the casing may be stripped off (an edible casing  may be left on if preferred, subject
to cooking requirements etc.).  Thereafter the compact
is coated with a batter which is substantially oven-
proof, i.e. will not char or burn when cooked at the
temperature and length of time required to cook the
meat; such batters are commercially available.  Preferably a liquid batter is employed, in which case
the coating may be applied by passing the compact
through a "curtain" of batter, by spraying or by immersion,
or the like.  It is envisaged that a powder batter
may be employed, coating being achieved by rolling
the compact therein or blowing the powder on.

It has been found that adherence of the batter to
the compact  may be improved by predusting the compact
with a fine powder e.g. cornflour; predusting may be
achieved by rolling the compact in the powder or blowing
the powder thereon.  In addition to improved adherence,
it has been found that the  opacity of the batter
layer may be increased, this is of advantage with a
dark meat, such as turkey dark meat for consumer
presentation.

Where the compact has been frozen it has been
found that adherence of the batter during cooking
may be improved by "deglazing" or giving a matt
finish to the surface of the compact, e.g. by
spraying briefly with warm water.  It is thought
that with a glazed surface a thin layer of water
(or ice) between the compact and the batter may
flash off during heating, or frying, causing the batter to bubble or flake off.

Surplus batter may be removed from the compact by allowing it to fall off or by shaking the compact or blowing the coated compact, which may then be passed through a flash fryer to consolidate the batter coating on the compact. It is envisaged that other methods or batters to produce a consolidated coating may be employed.

A preferred form of the process according to the second aspect of the invention includes applying a coating of edible crumbs, e.g. breadcrumbs or potato crumbs to the batter coating; oven proof breadcrumbs are commercially available. The crumb coating may be readily applied before consolidation of the batter coating. If a frozen compact has been utilised then it may be found that the batter has frozen on contact with the compact, in which case it is preferable to defrost the coating to improve adherence of the crumbs to the batter.

Where a cylindrical compact is utilized the crumb coating may be applied to a fluid batter coating by rolling the batter coated compact down a sloping conveyor which bears a carpet of crumbs, the ends of the compact being coated by having a pile of crumbs suitably located at the bottom of the conveyor.

The crumb coating may be subjected to gentle pressure, e.g. by rolling or passing through rollers, to consolidate it and improve adherence to the batter;

excess crumbs may be blown off and recycled. After applying the crumb coating the product may then be flash fried; this will produce an attractive browning of the batter/crumb coating and further consolidate the coating. It is envisaged that other suitable heat treatment may be employed e.g. hot air.

It is envisaged that the batter and crumb coatings may be applied as one by mixing the crumb into the batter to form a granular mix.

In another preferred method wherein the meat is extruded, the batter coating is applied by extrusion around the extruded compact, preferably by coextrusion with the compact or shortly after the extrusion of, the compact in a "continuous" process. A batter of viscous or pasty consistency is desirable. An advantage here is that prior treatment of the compact to preserve its physical integrity e.g. freezing,may be obviated. The compact and batter are preferably extruded into a casing and then frozen. The casing may then be stripped off and the batter coating allowed to defrost sufficiently for application of a crumb layer where desired.

Alternatively, the crumbs may be mixed in the batter to produce a granular mix which is extruded around the the compact into a casing, the casing being stripped off after the product has been frozen. The crumb content will increase the viscosity of the coating. It will be understood that if the batter layer is sufficiently coherent the casing and the freezing step may both be dispensed with, the presence of the batter being enough to maintain the shape of the compact.

The process of the present invention can be fully automated and produces a product of attractive appearance, with a meat flavour derived only from the meat employed, the product being pleasant to eat and suffering only small loss of weight during cooking as compared with a similar uncoated product.

Examples of products made in accordance with the invention are shown, by way of Example only, in the accompanying drawings, in which:

Fig. 1 is a plan of a turkey roll,

Fig. 2 is a section along the line 2-2 of Fig. 1

Fig. 3 is a plan of an alternative turkey roll,

Fig. 4 is a perspective view of the roll of Fig. 3,

Fig. 5 is a plan of a turkey burger,

Fig. 6 is a perspective view, partially broken away, of the burger of Fig. 5.

Referring now to the drawings, in which like parts are identified by like numerals, there is shown a product 1 comprising an extruded compact 2 formed from pieces of turkey flesh 3. The compact 2 is coated at least partially with a coating of a substantially oven-proof batter 4 to which batter coating is adhered a layer of substantially oven-proof breadcrumbs 5.

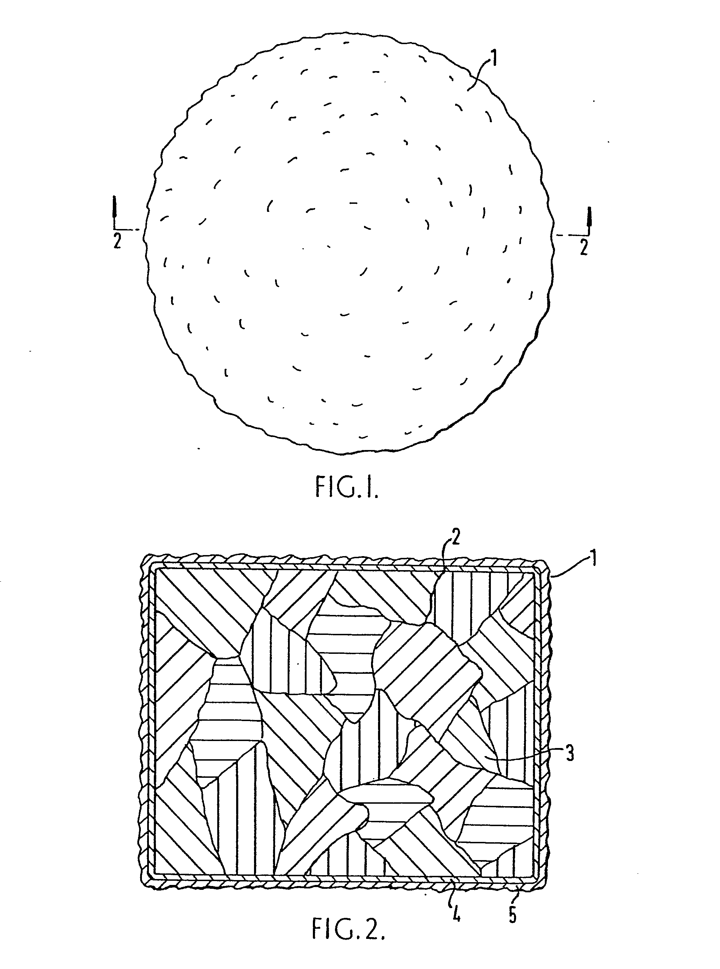

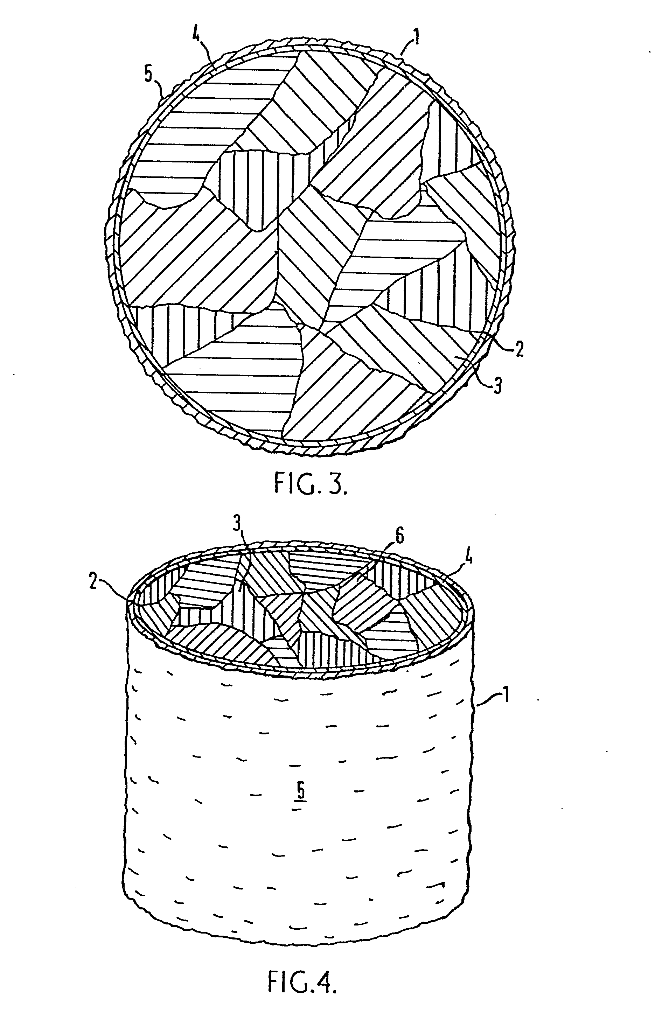

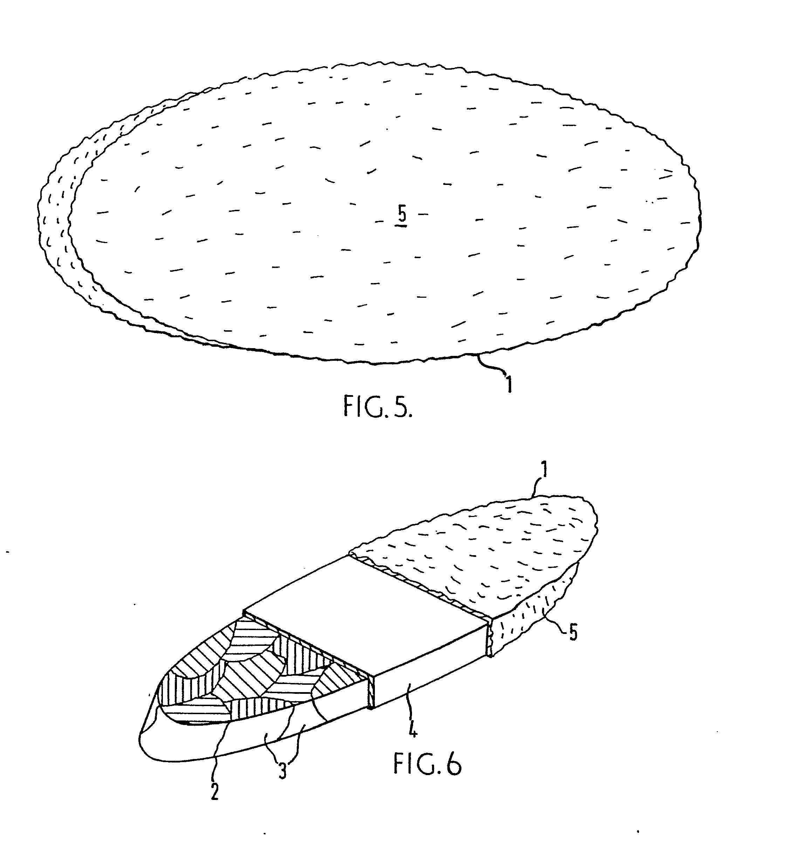

The cylindrical turkey roll 1 of Figs 1 and 2 is coated all over with the batter coating 4 and the crumb layer 5; the turkey roll 1 of Figs. 3 and 4 has one of its ends 6 uncoated with the batter coating 4 and the crumb layer 5 thus to make the nature of the meat compact 2 available to inspection by a consumer: the turkey burger 1 of Figs. 5 and 6 is formed by oblique cutting of a cylindrical compact 2 followed by application of the batter coating 4 and crumb layer 5
in the manner specified hereinbefore.

Embodiments of the process of the present invention
will now be described, by way of example only.

Example 1

Skinless, boneless, turkey breast meat was tumbled
in a quantity of brine solution for 40 minutes until
substantially all of the brine was taken up by the meat
and the meat was then allowed to stand for at least one
hour to consolidate it. When dark turkey meat is used,
tumbling is generally effected for approximately 70
minutes.

The meat was then extruded into a nylon casing, the
distal end of which was clipped shut, using a vacuum
filling machine available from L. Piereder of Canada
to produce a cylindrical compact some 68.5cm long and 10cm
diameter. The casing was clipped automatically at its
proximal end and then the compact passed through an air-
blast freezing unit where it was cooled until its internal
temperature reached -14°C. The nylon casing was then
removed and the compact cut with a bandshaw, this may be
done automatically into pieces of a desired size. It is
to be noted here that such pieces may be right-cylindrical
in shape to resemble a conventional "roast" or burger (depending on the thickness of the pieces), or may be cut obliquely to the longitudinal axis thereby to produce an elliptical product of "steak"-like appearance.

After cutting, the frozen pieces were allowed to stand or sprayed with warm water until their external temperature was just above the freezing point of a batter mix and were dusted all over with a pre-dusting flour containing cornflour, thereafter the pieces were rotatably impaled upon coaxial prongs and immersed in a bath of liquid batter. The batter was substantially oven-proof in character and was made up from batter mix supplied by RHM Ingredient Supplies Ltd. under the Trade Mark "Pandora". It is to be noted here that any suitable coating method may be employed such as spraying, immersion or the like. It is preferred that a continuous batter envelope be formed about the compact for ease of application etc. although it may be sometimes desirable not to coat the ends of the compact.

After immersion, excess batter was blown off or allowed to drain and the batter-coated compact was coated, preferably by rolling about the coaxial prongs, with substantially oven-proof breadcrumbs. Such breadcrumbs are available under the Trade Mark "Pandora" from RHM Ingredient Supplies Ltd.

After optionally subjecting the breadcrumbed pieces to consolidation under a pressure plate or roller, ——————————————————— the breadcrumbed pieces were subjected to flash-frying in oil at a temperature of

from 178° to 182°C for 50 to 59 seconds. This browned the batter and breadcrumbs and caused the batter to set. The flash-fried pieces were then packed, by, for example, vacuum wrapping in suitable material, and were then ready for sale; generally they would be deep frozen until required.

It has been found convenient to use for battering/crumbing, a cylindrical compact longer than the desired product for sale. After flash-frying and freezing, the compact may then be cut into 2 or more pieces so that the required size is obtained for retail purposes. For example a 3lb compact may be cut to two 1½lb compacts or a 3½lb compact may be cut to form 2lb and 1½lb compacts. Furthermore, the meaty interior is then visible at at least one end of the roll to allow the purchaser to assess the quality of the product.

Example 2

A 30" long cylinder of turkey meat was extruded into a nylon casing and blast frozen. The casing was stripped off and the cylinder sawn into 6" lengths and passed onto a conveyor system where each length passed through a deglazing section where it was sprayed with warm water; a dusting section where it was dusted with cornflour; a batter coating section where it was passed through a curtain of batter, excess batter being blown off; the batter coated compact was then rolled down an upwardly moving conveyor having a layer of crumbs continuously applied at the lower end thereof, a separate conveyor located at the bottom supported a stationary heap of crumbs into which the compact ploughed, angled plates ensured
coating of the ends of the compact and caused the
compact to turn to lie longitudinally with the conveyor, excess crumbs were blown off; the compact
passed onto a steel mesh conveyor which took it
through a deep fat fryer held at a temperature of
192 to 198°C, with an immersion time of 35 to 40
seconds; the consolidated crumbed and battered roll
was then blast frozen and band sawed into halves
to provide an exposed meat end; the exposed end was
glazed to give a sealed surface and improve its appearance and then packed in a "Tiromat" packaging machine
manufactured by Kramer and Grebe.

The batter coating effectively seals the product
and considerably reduces weight loss as compared to a
similar product not so coated. The following table gives
the results of cooking turkey rolls, prepared by batter
immersion according to the present invention, in a partially -covered container in an oven for approximately
1½ hours and, for comparison purposes, the results of
similarly cooking an uncoated turkey roll.

|  | Initial Weight (gms) | Final Weight (gms) | Weight Loss |
|---|---|---|---|
| Turkey roll completely coated in batter and breadcrumbs | 540 | 465 | 14% |
| Turkey roll coated with batter and breadcrumbs except at one end (uncoated surface downwards) | 650 | 525 | 18% |
| Uncoated turkey roll | 510 | 380 | 26% |

It will be observed that the weight loss in the case of the uncoated product was almost double that of the completely coated product of the present invention. Even the only partially coated product lost significantly less weight than the uncoated product. Moreover the coated products of this invention were noticeably less dry, more succulent and of more pleasing flavour than the uncoated product.

Whilst in the foregoing Specification specific procedures and structures have been set out in considerable detail for the purpose of illustrating the invention, it will be understood that such details may be varied widely without departing from the spirit of the invention as defined by the appendant Claims.

0043260

CLAIMS:

1. A process for producing a cookable meat product, which process includes the steps of forming a compact of cookable meat, and preserving the physical integrity of the compact during subsequent processing steps, characterised in that it further includes coating at least part of the compact in a substantially oven-proof batter and consolidating the coating.

2. A process as claimed in Claim 1, characterized in that the physical integrity of the compact is preserved during subsequent processing steps by freezing the compact and in that the surface of the compact is deglazed prior to coating with batter.

3. A process as claimed in Claim 1 or 2, characterized in that the batter coating is consolidated by heating.

4. A process as claimed in any one of the preceding Claims, characterized in that the batter is applied to the compact by extrusion around the compact.

5. A process as claimed in any one of Claims 1 to 3, characterized in that the compact and the batter coating are formed by a coextrusion process.

6.    A process as claimed in Claim 4 or 5, characterized
in that the compact with batter coating is extruded into
a casing.

7.    A process as claimed in any one of Claims 1 to 6,
characterized in that the compact is dusted with a fine powder prior to coating with batter.

8.    A process as claimed in any one the preceding
Claims, characterized in that it includes a further step
of applying a coating of edible crumbs.

9.    A process as claimed in Claim 8, wherein the
edible crumbs are applied by mixing the crumbs with
batter and thereafter applying a coating of the mixture.

10.    A process as claimed in Claim 8, characterized in that
the crumb coating is applied to the batter coating, and
is applied prior to consolidation of the batter coating.

11.    A cookable meat product comprising a compact substantially or wholly of poultry meat, characterized in that
the compact is at least partially coated with a substantially oven-proof batter.

12.    A product as claimed in Claim 11, characterized in
that there is further provided a coating of edible
crumbs.

13. A product as claimed in Claim 12, wherein the batter and crumbs are intermixed to form a substantially unitary coating.

14. A product as claimed in Claim 12 or 13, characterized in that the crumb coating is substantially oven-proof.

FIG.1.

FIG.2.

FIG. 3.

FIG.4.

FIG.5.

FIG.6

European Patent Office

**EUROPEAN SEARCH REPORT**

EP 81 30 2910.5

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | GB - A - 1 089 014 (UNILEVER LTD.)<br>* claims 1 to 6; page 2, examples 1, 3 *<br>& BE - A - 675 030 | 1,3 | A 23 L  1/31<br>A 23 L  1/315 |
| | CA - A - 932 202 (R.D. BOWEN)<br>* claims 1 to 6 * | 1,3,8,<br>9 | |
| A | US - A - 3 595 682 (J.H. LIND et al.) | | |
| A | DE - A1 - 2 449 902 (UNILEVER N.V.)<br>& GB - A - 1 472 748 | | |
| A | EP - A1 - 0 011 402 (B. MATTHEWS LTD.) | | |
| A,P | & GB - A - 2 036 531 | | |

TECHNICAL FIELDS SEARCHED (Int. Cl.³)

A 23 L  1/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search | Date of completion of the search | Examiner | |
| Berlin | 03-08-1981 | SCHULTZE | |

EPO Form 1503.1  06.78